(19) Europäisches Patentamt
European Patent Office
Office européen des brevets

(11) **EP 4 149 805 B1**

(12) **EUROPÄISCHE PATENTSCHRIFT**

(45) Veröffentlichungstag und Bekanntmachung des Hinweises auf die Patenterteilung:
**10.07.2024   Patentblatt 2024/28**

(21) Anmeldenummer: **21728823.2**

(22) Anmeldetag: **12.05.2021**

(51) Internationale Patentklassifikation (IPC):
***B60T 13/68*** *(2006.01)*      ***B60T 8/172*** *(2006.01)*

(52) Gemeinsame Patentklassifikation (CPC):
**B60T 13/686; B60T 8/172**

(86) Internationale Anmeldenummer:
**PCT/DE2021/200066**

(87) Internationale Veröffentlichungsnummer:
**WO 2021/228335 (18.11.2021 Gazette 2021/46)**

(54) **VERFAHREN ZUR REGELUNG DER DRUCKSTELLUNG IN EINEM BREMSSYSTEM**

METHOD FOR REGULATING THE PRESSURE POSITION IN A BRAKING SYSTEM

PROCÉDÉ POUR RÉGULER LA POSITION DE PRESSION DANS UN SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2020   DE 102020206177**

(43) Veröffentlichungstag der Anmeldung:
**22.03.2023   Patentblatt 2023/12**

(73) Patentinhaber: **Continental Automotive Technologies GmbH**
**30175 Hannover (DE)**

(72) Erfinder:
• **GRONAU, Ralph**
  **60488 Frankfurt am Main (DE)**
• **MURATOSKI, Jusuf**
  **60488 Frankfurt am Main (DE)**
• **BAUER, Alexander**
  **60488 Frankfurt am Main (DE)**
• **SCHMIDT, Jurij**
  **60488 Frankfurt am Main (DE)**

(74) Vertreter: **Continental Corporation**
**c/o Continental Automotive Technologies GmbH**
**Intellectual Property**
**Guerickestr. 7**
**60488 Frankfurt am Main (DE)**

(56) Entgegenhaltungen:
**US-A1- 2011 153 177    US-A1- 2012 319 466**
**US-A1- 2020 010 059**

**Beschreibung**

Die Erfindung betrifft ein Verfahren zur Regelung einer Druckstellung in einem Bremssystem, aufweisend eine Druckbeaufschlagungseinrichtung und ein Überströmventil, wobei eine Druckanforderung, insbesondere durch eine Steuereinheit für die Druckstellung und zur Regelung des Überströmventils, empfangen wird und ein Druckanforderungsgradient aus der Druckanforderung bestimmt wird und zur Regelung herangezogen wird.

Aus der US 2012319466 A1 ist ein Verfahren zum Ansteuern eines Überströmventils in einer hydraulischen Bremsanlage bekannt. Dabei wird die Dynamik des Druckaufbaus dadurch verbessert, dass das Ventil erst bei größeren Drücken öffnet, sodass ein größerer Anteil des von der Druckbeaufschlagungseinrichtung kommenden Volumenstroms tatsächlich bis zu den Radbremsen geleitet wird.

Bei bekannten Regelungen zur Druckstellung in einem Bremssystem wird die Ansteuerung einer Pumpe zum fahrerunabhängigen Druckaufbau für Komfortfunktionen und kontinuierliche, kurze Druckaufbauten lediglich basierend auf dem Druckanforderungsgradienten durchgeführt. Eine solche Regelung hat bei langsamen Druckanforderungen Vorteile, weist jedoch Probleme bei schnellen, hohen Druckanforderungen auf. Bei einer solchen schnellen, hohen Druckanforderung weist der Druckanforderungsgradient einen sehr hohen Wert auf, der sehr schnell wieder auf 0 abfällt, wenn die Druckanforderung auf einem konstanten Wert konstant gehalten wird. Dabei wird einerseits ein berechneter Volumenstrombedarf unzulässig stark reduziert, obwohl der Zieldruck noch nicht erreicht ist. Ein weiteres Problem stellt die Berechnung des Überströmvolumens über das Überströmventil dar, das sich aus dem Volumenstrom der Druckbeaufschlagungseinrichtung und dem Volumenstrombedarf ergibt. Bei einem physikalisch nicht vorhandenen, aber fälschlicherweise zum Berechnen verwendeten Überströmvolumen, werden zu große Korrekturwerte für den elektrischen Ventilstrom berechnet und somit die Stellgenauigkeit des Überströmventils signifikant verschlechtert.

Es stellt sich somit die Aufgabe, eine Regelung für die Druckstellungen in einem Bremssystem anzugeben, welche auch bei schnellen, hohen Druckanforderungen ein schnelles und genaues Erreichen der Druckanforderung sicherstellt.

Die Aufgabe wird gelöst durch ein Verfahren nach Anspruch 1, in dem eine Druckanforderung durch eine Steuereinheit für die Druckstellung und insbesondere zur Regelung des Überströmventils, beispielsweise von einem ESC-Steuergerät, empfangen wird und ein Druckanforderungsgradient aus der Druckanforderung bestimmt wird. Dazu kann die Druckanforderung zeitlich abgeleitet werden und gegebenenfalls Filterungs- und Glättungsmaßnahmen durchgeführt werden. Aus dem Druckanforderungsgradienten wird ein Volumenstrombedarf ermittelt. Dazu kann in der Steuereinheit eine entsprechende Kennlinie oder eine Umrechnungsgröße wie ein Multiplikationsfaktor abgelegt sein. Die Druckbeaufschlagungseinrichtung wird zum Aufbauen eines hydraulischen Drucks angesteuert einen Volumenstrom zu erzeugen. Die Druckbeaufschlagungseinrichtung kann eine hydraulische Pumpe umfassen, die aktiviert wird, um einen Volumenstrom des Hydraulikfluids des Bremssystems zu generieren. Da sich die Druckbeaufschlagungseinrichtung im Allgemeinen nicht sehr genau regulieren lässt, entspricht der tatsächlich durch diese bereitgestellte Volumenstrom nicht exakt der Anforderung, sodass der tatsächliche Volumenstrom der Druckbeaufschlagungseinrichtung bestimmt wird. Dabei kann außerdem ein Volumenstrom angefordert werden, der größer ist als der errechnete Volumenstrombedarf. Darüber hinaus wird ein elektrischer Ventilstrom für das Überströmventil berechnet und an diesem bereitgestellt. Der elektrische Ventilstrom hängt einerseits vom geforderten Differenzdruck über das Überströmventil und damit von der Druckanforderung ab. Außerdem muss der Ventilstrom an das Überströmvolumen durch das Überströmventil angepasst werden, da durch den Venturi-Effekt Kräfte auf einen Ventilstößel in dem Überströmventil wirken und diesen bewegen. Die Regelung des Überströmventils erfolgt daher basierend auf der Druckanforderung und der Differenz des tatsächlichen Volumenstroms und des Volumenstrombedarfs.

Um gezielt auf eine schnelle, hohe Druckanforderung reagieren zu können, wird der Druckanforderungsgradient daraufhin überwacht, ob dieser einen Gradientengrenzwert überschreitet. In diesem Fall wird ein Sondermodus aktiviert, wobei in dem Sondermodus ein Minimalwert für den Volumenstrombedarf vorgegeben wird, der nicht unterschritten werden kann. Das heißt, wenn ein Wert für den Volumenstrombedarf berechnet wird, der kleiner als der Minimalwert ist, wird der Volumenstrombedarf auf den Minimalwert gesetzt. Der Minimalwert wird basierend auf einem letzten Maximum des Volumenstrombedarfs berechnet. Dazu kann, wenn der Gradientengrenzwert überschritten wird, der größte auftretende Volumenstrombedarf als Maximalwert gespeichert werden.

Der Sondermodus wird wieder deaktiviert, wenn eine Differenz zwischen der Druckanforderung und einem Systemdruck einen ersten Grenzwert unterschreitet, wenn also der hydraulische Druck im System die Druckanforderung bis auf eine vorgegebene Differenz erreicht hat.

In einer bevorzugten Ausführungsform der Erfindung wird der Systemdruck aus einer fahrzeugspezifischen Modellberechnung bestimmt. Dadurch kann auf einen zusätzlichen Drucksensor verzichtet und somit Kosten eingespart werden. Die fahrzeugspezifische Modellberechnung kann auf realen Messdaten von Systemdruck und Volumenaufnahme der Bremsanlage beruhen.

In einer weiteren bevorzugten Ausführungsform der Erfindung wird die Druckbeaufschlagungseinrichtung basierend auf dem Volumenstrombedarf angesteuert. Bei der Druckbeaufschlagungeinrichtung kann es sich beispielsweise um eine hydraulische Pumpe handeln, deren Durchfluss auf den Volumenstrombedarf oder auf einen Volumenstrom größer als der Volumenstrombedarf geregelt wird. Zusätzlich kann auch eine vorgegebene Nachlaufzeit der Pumpe vorgesehen sein.

In einer weiteren bevorzugten Ausführungsform der Erfindung wird der tatsächliche Volumenstrom aus einer Drehzahl der Druckbeaufschlagungseinrichtung bestimmt. Dies ist ein besonders einfacher Weg, den tatsächlichen Volumenstrom zu bestimmen, da die Drehzahl der Pumpe einfach aus entsprechenden Signalen oder aus der Auswertung der Versorgungsspannung bestimmt werden kann.

In einer weiteren bevorzugten Ausführungsform der Erfindung wird in dem Sondermodus der Minimalwert des Volumenstrombedarfs auf einen Wert zwischen 100% und 60%, bevorzugt 90% und 70% des letzten Maximums des Volumenstrombedarfs gesetzt. Durch den weiterhin hohen Volumenstrombedarf wird die empfangene Druckanforderung besonders schnell erreicht. Es wird jedoch nicht auf dem Maximalwert verblieben, um ein Überschießen, also einen zu hohen Systemdruck zu erzeugen, welche zu einem zu starken Bremsdruck und daher zu einem über Bremsen führen könnte.

In einer weiteren bevorzugten Ausführungsform der Erfindung wird der Druckanforderungsgradient auf das Auftreten eines Maximums überwacht und bei Erkennen eines Maximums der aktuelle Volumenstrombedarf als letztes Maximum des Volumenstrombedarfs herangezogen. Dazu kann beispielsweise der Wert des Druckanforderungsgradienten der größer als der Grenzwert ist als mögliches Maximum gespeichert werden und jeder neue Wert des Druckanforderungsgradienten überprüft werden, ob dieser größer ist. Aus dem größten Wert wird der zugehörige Volumenstrombedarf berechnet. Dazu kann wieder die in der Steuereinheit hinterlegte Kennlinie oder eine Umrechnungsgröße wie ein Multiplikationsfaktor genutzt werden. Alternativ kann die Druckanforderung ein zweites Mal abgeleitet werden, um den Maximalwert des Druckanforderungsgradienten als Nullstelle der zweiten Ableitung zu finden.

In einer weiteren bevorzugten Ausführungsform der Erfindung wird bei Deaktivierung des Sondermodus in einen Übergangsmodus umgeschaltet, wobei in dem Übergangsmodus der Minimalwert des Volumenstrombedarfs, insbesondere linear, reduziert wird. Bevorzugt wird der Minimalwert bis auf 0 reduziert. Dadurch wird ein abrupter Übergang und somit ein mögliches Überschießen des Systemdrucks über die Druckanforderung vermieden, da der Systemdruck durch die lineare Reduktion des Volumenstrombedarfs langsam an die Druckanforderung herangeführt wird. Dazu kann der Minimalwert proportional mit der Differenz zwischen Druckanforderung und Systemdruck angepasst werden.

In einer weiteren bevorzugten Ausführungsform der Erfindung liegt der erste Grenzwert zwischen 25 und 2 bar, bevorzugt 12 und 4 bar, besonders bevorzugt zwischen 6 und 10 bar. Durch einen solchen Grenzwert wird der Systemdruck besonders schnell und genau auf den angeforderten Druck geregelt.

In einer weiteren bevorzugten Ausführungsform der Erfindung ist der Gradientengrenzwert größer als 100 bar/Sekunde, bevorzugt größer als 150 bar/Sekunde, besonders bevorzugt größer als 200 bar/Sekunde.

Die Erfindung wird außerdem gelöst durch ein hydraulisches Bremssystem aufweisend zumindest eine hydraulische Radbremse und eine Druckbeaufschlagungseinrichtung, welche mit der Radbremse verbunden ist und dazu eingerichtet ist, einen Volumenstrom in Richtung der zumindest einen Radbremse zu fördern und ein Überströmventil, welches derart mit der Radbremse verbunden ist, dass ein Volumenstrom über das Überströmventil von der Radbremse wegfließen kann, um einen hydraulischen Druck an der zumindest einen Radbremse einzuregeln. Erfindungsgemäß ist eine Steuereinheit vorgesehen, die dazu eingerichtet ist, ein oben beschriebenes Verfahren auszuführen.

Weitere Merkmale, Vorteile und Anwendungsmöglichkeiten der Erfindung ergeben sich auch durch die nachfolgende Beschreibung von Ausführungsbeispielen und der Zeichnungen.

Fig. 1 zeigt schematisch die hydraulische Schaltung eines Bremssystems,
Fig. 2 zeigt schematisch den erfindungsgemäßen Verfahrensablauf,
Fig. 3 zeigt ein Diagramm mit Verfahrensdaten;

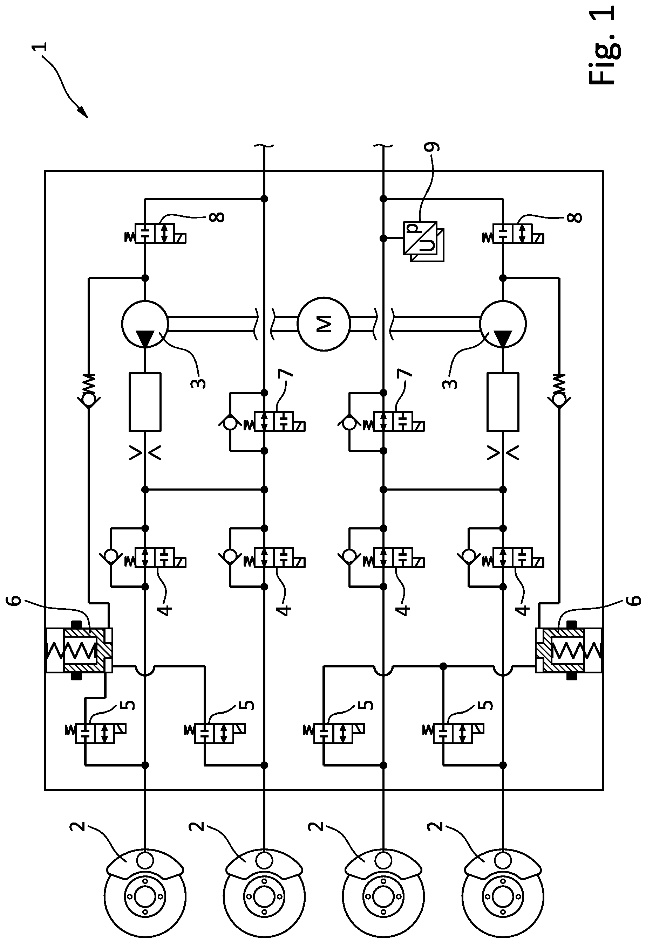

Das in Figur 1 dargestellte Bremssystem 1 ist prinzipiell aus dem Stand der Technik bekannt. Das Bremssystem 1 weist vier Radbremsen 2 auf, die im Normalbetrieb mit einem Tandemhauptbremszylinder (nicht dargestellt) verbunden sind und vom Fahrer mittels eines Bremspedals mit Druck beaufschlagt werden. Das Bremssystem 1 weist zwei im Wesentlichen identische Bremskreise auf, die jeweils mit einer Kammer des Tandemhauptbremszylinders verbunden sind und zwei Radbremsen 2 ansteuern. Im Normalbetrieb ist ein zwischengeschaltetes Hauptzylinderventil 7 (MCI) stromlos geöffnet und ein Pumpenventil 8 geschlossen. Jede Radbremse 2 verfügt darüber hinaus über ein Einlassventil 4, durch welches Hydraulikflüssigkeit in die Radbremsen gelangen kann und ein Auslassventil 5, durch welches die Hydraulikflüssigkeit in einen Niederdruckspeicher 6 aus den Radbremsen 2 abgelassen werden kann.

Zum fahrerunabhängigen Aufbau von Bremsdruck in den Radbremsen 2 kann das Pumpenventil 8 geöffnet werden und die hydraulische Pumpe 3 aktiviert werden, um Hydraulikflüssigkeit durch die Einlassventile 4 in die Radbremsen 2 zu pumpen.

Da mittels einer hydraulischen Pumpe 3 keine sehr genaue Druckregelung in den Radbremsen 2 möglich ist, wird das Hauptzylinderventil 7 nicht vollständig geschlossen sondern als Überströmventil 7 genutzt. Dazu wird mittels der hydraulischen Pumpe 3 etwas mehr Hydraulikflüssigkeit in Richtung der Radbremsen 2 gepumpt als dort zum Aufbau eines angeforderten Bremsdrucks benötigt wird. Das überschüssige Volumen wird als Überströmvolumen durch das Überströmventil 7 abgeführt. Das Überströmventil 7 wird dazu auf den benötigten Bremsdruck in den Radbremsen 2 eingestellt, um den Bremsdruck exakt zu regeln. Der benötigte elektrische Ventilstrom hängt dabei vom einzustellenden Differenzdruck über dem Überströmventil 7 ab. Da bei einem fahrerunabhängigen Aufbau von Bremsdruck die Seite des Überströmventil 7, welche mit dem Hauptbremszylinder verbunden ist, im Wesentlichen druckfrei ist, entspricht der Differenzdruck über dem Überströmventil 7 dem Druck der Radbremsen. Der benötigte elektrische Ventilstrom des Überströmventils 7 hängt außerdem vom Überströmvolumen über das Überströmventil 7 ab.

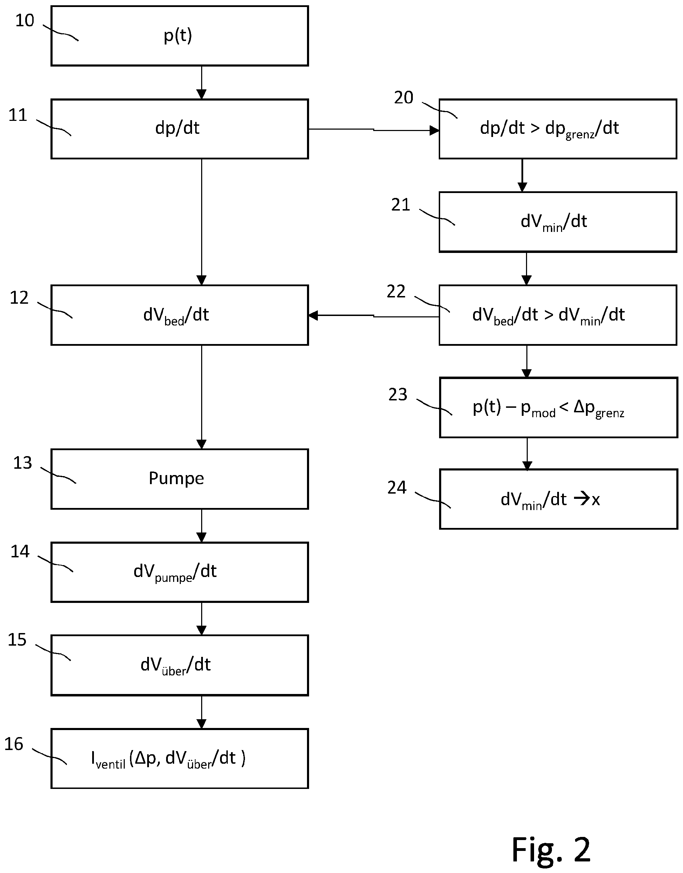

In Figur 2 ist nun der Verfahrensablauf vereinfacht dargestellt. In einem Schritt 10 wird eine Druckanforderung p(t), beispielsweise von einem ESC Steuergerät, empfangen. In einem Schritt 11 wird aus der Druckanforderung p(t) ein Druckanforderungsgradient $\frac{dp}{dt}$ durch Ableitung bestimmt. Darüber hinaus können auch Filter und Glättungsmaßnahmen durchgeführt werden.

Für hinreichend langsame Veränderungen der Druckanforderung p(t) wird in einem Schritt 12 aus dem Druckanforderungsgradient $\frac{dp}{dt}$ ein Volumenstrombedarf $\frac{dV}{dt}_{bed}$ ermittelt, indem der Druckanforderungsgradient $\frac{dp}{dt}$ mit einem fahrzeugspezifischen Wert $\frac{dV}{dp}$ für den Zusammenhang zwischen Druckänderung und Volumenänderung multipliziert wird.

$$\frac{dV}{dt}_{bed} = \frac{dp}{dt} \cdot \frac{dV}{dp}$$

In einem Schritt 13 wird die hydraulische Pumpe 3 aktiviert und mit einer Drehzahl betrieben, die einen Volumenstrom der hydraulischen Pumpe 3 ergibt, der um einen vorgebbaren Wert größer ist als der berechnete Volumenstrombedarf $\frac{dV}{dt}_{bed}$.

In einem Schritt 14 wird der tatsächliche Volumenstrom $\frac{dV}{dt}_{pumpe}$ der hydraulischen Pumpe 3 bestimmt. Dazu wird die Drehzahl der hydraulischen Pumpe 3 ermittelt und aus einer Kennlinie der hydraulischen Pumpe 3 der Volumenstrom $\frac{dV}{dt}_{pumpe}$ bestimmt werden.

Das benötigte Überströmvolumen $\frac{dV}{dt}_{über}$ über das Überströmventil 7 wird in einem Schritt 15 aus dem tatsächlichen Volumenstrom $\frac{dV}{dt}_{pumpe}$ der hydraulischen Pumpe 3 und dem Volumenstrombedarf $\frac{dV}{dt}_{bed}$ bestimmt.

$$\frac{dV}{dt}_{über} = \frac{dV}{dt}_{pumpe} - \frac{dV}{dt}_{bed}$$

Im Schritt 16 wird aus einer Kennlinie des Überströmventils 7 mit der Druckanforderung p(t) als Druckdifferenz Δp und dem bestimmten Überströmvolumen $\frac{dV}{dt}_{über}$ der benötigte elektrische Ventilstrom bestimmt und das Überströmventil 7 mit diesem elektrischen Strom versorgt.

Um auch bei schnellen, hohen Druckanforderungen, das heißt, wenn die Druckanforderung p(t) rapide, insbesondere stufenförmig, ansteigt, schnell und sicher den angeforderten Druck zu erreichen, ist darüber hinaus wie in Schritt 20 dargestellt vorgesehen, den Druckanforderungsgradienten $\frac{dp}{dt}$ zu überwachen, ob dieser einen vorgegebenen Grenzwert $\frac{dp}{dt}_{grenz}$ überschreitet. Ist dies der Fall, wird ein Sondermodus aktiviert und in Schritt 21 ein maximaler Volumenstrombedarf $\frac{dV}{dt}_{max}$ ermittelt. Dazu kann insbesondere aus dem Maximum des Druckanforderungsgradienten $\frac{dp}{dt}$ mittels des fahrzeugspezifischen Werts der maximale Volumenstrombedarf errechnet werden.

$$\frac{dV}{dt}_{max} = \frac{dp}{dt}_{max} \cdot \frac{dV}{dp}$$

Aus dem maximalen Volumenstrombedarf $\frac{dV}{dt}_{max}$ wird ein Minimalwert $\frac{dV}{dt}_{min}$ für den Volumenstrom festgelegt der in der dargestellten Ausführungsform 20% kleiner gewählt ist als der maximale Volumenstrombedarf $\frac{dV}{dt}_{max}$.

$$\frac{dV}{dt}_{min} = 0,8 \cdot \frac{dV}{dt}_{max}$$

Während der Sondermodus aktiviert ist, kann wie in Schritt 22 dargestellt der Volumenstrombedarf $\frac{dV}{dt}_{bed}$ den Minimalwert $\frac{dV}{dt}_{min}$ nicht unterschreiten.

Die Beendigung des Sondermodus wird in Schritt 23 durchgeführt, sobald die Differenz zwischen der Druckanforderung p(t) und einem Systemdruck in den jeweiligen Radbremsen 2 einen entsprechenden Grenzwert unterschreitet. Wie in Figur 1 dargestellt, ist lediglich ein einziger Drucksensor 9 vorgesehen, der den Druck auf der Niederdruckseite der hydraulischen Pumpe 3 des unteren Bremskreises misst. Der Systemdruck in den Radbremsen 2 kann daher nicht direkt gemessen werden. Daher wird ein fahrzeugspezifisches Druckmodell gerechnet, aus welchem der Systemdruck bestimmt werden kann. Sobald sich der aus dem Druckmodell bestimmte Systemdruck bis auf den Grenzwert an die Druckanforderung p(t) angenähert hat, wird der Sondermodus beendet und in Schritt 24 in einen Übergangsmodus gewechselt. In dem Übergangsmodus wird der Minimalwert $\frac{dV}{dt}_{min}$ des Volumenbedarfs linear bis auf 0 reduziert.

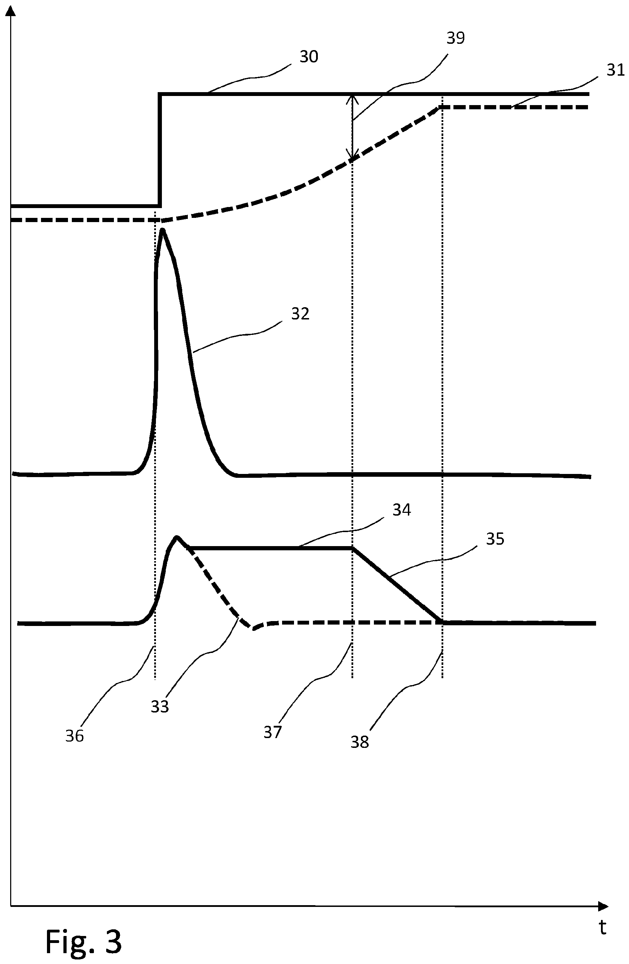

Figur 3 zeigt beispielhaft den Zeitverlauf verschiedener Größen bei einer schnellen, hohen Druckanforderung (hier als Sprung dargestellt). Als erste Eingangsgröße wird, beispielsweise von einem ESC-Steuergerät, die Druckanforderung 30 empfangen. Diese weist zum Zeitpunkt 36 eine Stufe auf, die von etwa p = 0 auf einen konstanten Wert p > 0 wechselt. Der tatsächliche Systemdruck kann einer solchen, schnellen, hohen Druckanforderung jedoch nicht folgen, sondern weist einen Verlauf 31 auf, der mit einer gestrichenen Linie dargestellt ist. Da der tatsächliche Systemdruck nicht direkt gemessen werden kann, wird dieser mittels eines fahrzeugspezifischen Druckmodells 31 bestimmt.

Der Druckanforderungsgradient 32 entspricht im Wesentlichen der zeitlichen Ableitung der Druckanforderung 30 der bereits mit einer zeitlichen Filterung versehen ist. Der Druckanforderungsgradient 32 steigt trotz der zeitlichen Filterung sehr schnell bis auf einen Maximalwert an und fällt danach wieder sehr steil bis auf 0 ab.

Der Volumenstrombedarf 33 errechnet sich aus dem Druckanforderungsgradient 32 durch Multiplikation mit einer fahrzeugspezifischen Volumenaufnahme $\frac{dV}{dp}$ die mittels einer Druck-/Volumenaufnahmemessung bestimmt wurde und in dem Bremsensteuergerät abgespeichert ist. Nach dieser Berechnungsformel würde der Volumenstrombedarf 33 den gestrichelt dargestellten Verlauf nehmen, und daher ebenso schnell auf 0 abfallen wie der Druckanforderungsgradient 32. Zu dem Zeitpunkt, zu dem der Volumenstrombedarf bereits wieder auf 0 abgefallen wäre, ist der Systemdruck 31 noch nicht bis auf den eigentlich angeforderten Druck 30 angestiegen, sondern hat vielmehr nur einen Bruchteil des angeforderten Drucks erreicht. Da der Volumenstrombedarf 33 als Basis für die Regelung der hydraulischen Pumpe 3 und des Überströmventils 7 genutzt wird, würde das schnelle Abfallen des Volumenstrombedarfs 33 somit verhindern, dass der angeforderte Bremsdruck tatsächlich bereitgestellt werden könnte.

Entsprechend wird zum Zeitpunkt 36 der Sondermodus gestartet, da der Druckanforderungsgradient 32 einen Grenzwert überschreitet. Dazu wird zum Zeitpunkt des maximalen Druckanforderungsgradient 32 der Volumenstrombedarf berechnet und als maximaler Volumenstrombedarf gespeichert. Aus diesem maximaler Volumenstrombedarf wird ein Minimalwert 34 für den Volumenstrombedarf festgesetzt, welcher für die Dauer des Sondermodus nicht unterschritten werden kann. Entsprechend entspricht der Volumenstrombedarf nicht dem errechneten gestrichelten Verlauf 33, sondern verbleibt auf dem Minimalwert 34 bis zu einem Zeitpunkt 37 zu dem der Sondermodus beendet wird, da eine Differenz 39 zwischen der Druckanforderung 30 und dem Druckmodell 31 einen Grenzwert unterschreitet.

Zu dem Zeitpunkt 37 wird der Sondermodus beendet und in einen Übergangsmodus 35 gewechselt. Bei dem Übergangsmodus 35 wird der Minimalwert des Volumenstrombedarfs linear bis auf 0 reduziert, sodass zu einem Zeitpunkt 38 auch der Übergangsmodus beendet wird. Zu diesem Zeitpunkt entspricht der Systemdruck aus dem Druckmodell 31 im Wesentlichen der Druckanforderung 30.

**Bezugszeichenliste:**

| | |
|---|---|
| 1 | Bremssystem |
| 2 | Radbremse |
| 3 | Hydraulische Pumpe |
| 4 | Einlassventil |
| 5 | Auslassventil |
| 6 | Niederdruckspeicher |
| 7 | Überströmventil |
| 8 | Umschaltventil |
| 9 | Drucksensor Tandem Hauptzylinder |
| 10 | Empfang Druckanforderung |
| 11 | Druckgradient |
| 12 | Volumenstrombedarf |
| 13 | Pumpe aktivieren |
| 14 | Volumenstrom |

15   Überströmvolumen
16   Ventilstrom
20   Schnelle, hohe Druckanforderung
21   Maximum Volumenstrombedarf
22   Minimalwert Volumenstrombedarf
23   Bedingung Start Übergangsmodus
24   Volumenstromangleichung Übergangsmodus
30   Druckanforderung
31   Systemdruck aus Druckmodell
32   Druckanforderungsgradient
33   Volumenstrombedarf errechnet
34   Volumenstrombedarf Sondermodus
35   Volumenstrombedarf Übergangsmodus
36   Beginn Sondermodus
37   Wechsel Übergangsmodus
38   Ende Übergangsmodus
39   Erster Grenzwert

**Patentansprüche**

1. Verfahren zur Regelung einer Druckstellung in einem Bremssystem (1), aufweisend eine Druckbeaufschlagungseinrichtung (3) und ein Überströmventil (7), mit den Schritten

    - Empfangen (10) einer Druckanforderung (30) und bestimmen (11) eines Druckanforderungsgradienten (32) aus der Druckanforderung (30)
    - Bestimmen (12) eines Volumenstrombedarfs (33) aus dem Druckanforderungsgradienten (32)
    - Erzeugen eines hydraulischen Drucks (13) mittels der Druckbeaufschlagungseinrichtung (3)
    - Bestimmen eines tatsächlichen Volumenstroms (14) der Druckbeaufschlagungseinrichtung (3), und **gekennzeichnet durch** die folgenden Schritte:

       - Regeln des Überströmventils (7) basierend auf der Druckanforderung (30) und der Differenz des tatsächlichen Volumenstroms (14) und des Volumenstrombedarfs (33, 34, 35), wobei
       - ein Sondermodus aktiviert wird (36), wenn der Druckanforderungsgradient (32) einen Gradientengrenzwert überschreitet,
       - wobei in dem Sondermodus ein Minimalwert (22) für den Volumenstrombedarf (33, 34, 35), basierend auf einem letzten Maximum (21) des Volumenstrombedarfs (33, 34, 35), gesetzt wird,
       - und wobei der Sondermodus deaktiviert wird (37), wenn eine Differenz zwischen der Druckanforderung (30) und einem Systemdruck (31) einen ersten Grenzwert (39) unterschreitet.

2. Verfahren nach Anspruch 1, **dadurch gekennzeichnet, dass** der Systemdruck (31) aus einer fahrzeugspezifischen Modellberechnung bestimmt wird.

3. Verfahren nach Anspruch 1 oder 2, **dadurch gekennzeichnet, dass** die Druckbeaufschlagungseinrichtung (3) basierend auf dem Volumenstrombedarf (33, 34, 35) angesteuert wird.

4. Verfahren nach einem der vorhergehenden Ansprüche, **dadurch gekennzeichnet, dass** der tatsächliche Volumenstrom (14) aus einer Drehzahl der Druckbeaufschlagungseinrichtung (3) bestimmt wird.

5. Verfahren nach einem der vorhergehenden Ansprüche, **dadurch gekennzeichnet, dass** in dem Sondermodus der Minimalwert (22) des Volumenstrombedarfs (33, 34, 35) auf einen Wert zwischen 100% und 60%, bevorzugt 90% und 70% des letzten Maximums (21) des Volumenstrombedarfs gesetzt wird.

6. Verfahren nach einem der vorhergehenden Ansprüche, **dadurch gekennzeichnet, dass** der Druckanforderungsgradient (32) auf das Auftreten eines Maximums überwacht wird und bei Erkennen eines Maximums der aktuelle Volumenstrombedarf als letztes Maximum des Volumenstrombedarfs (21) herangezogen wird.

7. Verfahren nach einem der vorhergehenden Ansprüche, **dadurch gekennzeichnet, dass** bei Deaktivierung des Sondermodus (37) in einen Übergangsmodus umgeschaltet wird, wobei in dem Übergangsmodus der Minimalwert des Volumenstrombedarfs (35), insbesondere linear, reduziert wird.

8. Verfahren nach einem der vorhergehenden Ansprüche, **dadurch gekennzeichnet, dass** der erste Grenzwert (39) zwischen 2 und 25 bar, bevorzugt 4 und 12 bar, besonders bevorzugt 6 und 10 bar liegt.

9. Verfahren nach einem der vorhergehenden Ansprüche, **dadurch gekennzeichnet, dass** der Gradientengrenzwert größer als 100 bar/Sekunde ist, bevorzugt größer als 150 bar/Sekunde, besonders bevorzugt größer als 200 bar/Sekunde.

10. Hydraulisches Bremssystem aufweisend zumindest eine hydraulische Radbremse (2) und eine Druckbeaufschlagungseinrichtung (3), welche mit der Radbremse (2) verbunden ist und dazu eingerichtet ist, einen Volumenstrom in Richtung der zumindest einen Radbremse (2) zu fördern und ein Überströmventil (7), welches derart mit der Radbremse (2) verbunden ist, dass ein Volumenstrom über das Überströmventil von der Radbremse wegfließen kann und dazu eingerichtet, einen hydraulischen Druck an der zumindest einen Radbremse (2) einzuregeln, **dadurch gekennzeichnet, dass** eine Steuereinheit vorgesehen ist, die dazu eingerichtet ist, ein Verfahren nach Anspruch 1 bis 7 auszuführen.

## Claims

1. Method for regulating a pressure setting in a braking system (1), having a pressure application device (3) and an overflow valve (7), comprising the steps of

   - receiving (10) a pressure demand (30) and determining (11) a pressure demand gradient (32) from the pressure demand (30)
   - determining (12) a volume flow requirement (33) from the pressure demand gradient (32)
   - generating a hydraulic pressure (13) by means of the pressure application device (3)
   - determining an actual volume flow (14) of the pressure application device (3), and **characterized by** the following steps:

     - regulating the overflow valve (7) on the basis of the pressure demand (30) and the difference between the actual volume flow (14) and the volume flow requirement (33, 34, 35), wherein
     - a special mode is activated (36) when the pressure demand gradient (32) exceeds a gradient limit value,
     - wherein a minimum value (22) for the volume flow requirement (33, 34, 35) is set in the special mode on the basis of a last maximum (21) of the volume flow requirement (33, 34, 35),
     - and wherein the special mode is deactivated (37) when a difference between the pressure demand (30) and a system pressure (31) falls below a first limit value (39).

2. Method according to Claim 1, **characterized in that** the system pressure (31) is determined from a vehicle-specific model calculation.

3. Method according to Claim 1 or 2, **characterized in that** the pressure application device (3) is actuated on the basis of the volume flow requirement (33, 34, 35).

4. Method according to one of the preceding claims, **characterized in that** the actual volume flow (14) is determined from a speed of the pressure application device (3).

5. Method according to one of the preceding claims, **characterized in that**, in the special mode, the minimum value (22) of the volume flow requirement (33, 34, 35) is set to a value between 100% and 60%, preferably 90% and 70% of the last maximum (21) of the volume flow requirement.

6. Method according to one of the preceding claims, **characterized in that** the pressure demand gradient (32) is monitored for the occurrence of a maximum and, when a maximum is detected, the current volume flow requirement is used as the last maximum of the volume flow requirement (21).

7. Method according to one of the preceding claims, **characterized in that**, when the special mode (37) is deactivated, a switch is made to a transition mode, wherein the minimum value of the volume flow requirement (35) is reduced, in particular linearly, in the transition mode.

8. Method according to one of the preceding claims, **characterized in that** the first limit value (39) is between 2 and 25 bar, preferably 4 and 12 bar, particularly preferably 6 and 10 bar.

9. Method according to one of the preceding claims, **characterized in that** the gradient limit value is greater than 100 bar/second, preferably greater than 150 bar/second, particularly preferably greater than 200 bar/second.

10. Hydraulic braking system having at least one hydraulic wheel brake (2) and a pressure application device (3), which is connected to the wheel brake (2) and is designed to convey a volume flow in the direction of the at least one wheel brake (2), and an overflow valve (7) which is connected to the wheel brake (2) in such a way that a volume flow can flow away from the wheel brake via the overflow valve and is designed to adjust a hydraulic pressure at the at least one wheel brake (2), **characterized in that** a control unit is provided which is designed to carry out a method according to Claims 1 to 7.

## Revendications

1. Procédé de régulation d'une position de pression dans un système de freinage (1), présentant un dispositif de pressurisation (3) et une soupape de décharge (7), avec les étapes suivantes

   - la réception (10) d'une demande de pression (30) et la détermination (11) d'un gradient de demande de pression (32) à partir de la demande de pression (30),
   - la détermination (12) d'un besoin de débit volumique (33) à partir du gradient de demande de pression (32),

- la génération d'une pression hydraulique (13) au moyen du dispositif de pressurisation (3),
- la détermination d'un débit volumique réel (14) du dispositif de pressurisation (3), et **caractérisé par** les étapes suivantes :

   - la régulation de la soupape de décharge (7) sur la base de la demande de pression (30) et de la différence entre le débit volumique réel (14) et le besoin de débit volumique (33, 34, 35),
   - un mode spécial étant activé (36) lorsque le gradient de demande de pression (32) dépasse un valeur limite de gradient,
   - dans le mode spécial, une valeur minimale (22) pour le besoin de débit volumique (33, 34, 35) étant fixée sur la base d'un dernier maximum (21) du besoin de débit volumique (33, 34, 35),
   - et le mode spécial étant désactivé (37) lorsqu'une différence entre la demande de pression (30) et une pression de système (31) passe en dessous d'une première valeur limite (39).

2. Procédé selon la revendication 1, **caractérisé en ce que** la pression de système (31) est déterminée à partir d'un calcul de modèle spécifique au véhicule.

3. Procédé selon la revendication 1 ou 2, **caractérisé en ce que** le dispositif de pressurisation (3) est commandé sur la base du besoin de débit volumique (33, 34, 35).

4. Procédé selon l'une quelconque des revendications précédentes, **caractérisé en ce que** le débit volumique réel (14) est déterminé à partir d'une vitesse de rotation du dispositif de pressurisation (3).

5. Procédé selon l'une quelconque des revendications précédentes, **caractérisé en ce que**, dans le mode spécial, la valeur minimale (22) du besoin de débit volumique (33, 34, 35) est fixée à une valeur comprise entre 100 % et 60 %, de préférence entre 90 % et 70 % du dernier maximum (21) du besoin de débit volumique.

6. Procédé selon l'une quelconque des revendications précédentes, **caractérisé en ce que** le gradient de demande de pression (32) est surveillé pour détecter l'apparition d'un maximum et, si un maximum est détecté, le besoin de débit volumique actuel est utilisé comme dernier maximum du besoin de débit volumique (21).

7. Procédé selon l'une quelconque des revendications précédentes, **caractérisé en ce que**, lorsque le mode spécial (37) est désactivé, on passe à un mode de transition, la valeur minimale du besoin de débit volumique (35) étant réduite, notamment de manière linéaire, dans le mode de transition.

8. Procédé selon l'une quelconque des revendications précédentes, **caractérisé en ce que** la première valeur limite (39) est comprise entre 2 et 25 bars, de préférence entre 4 et 12 bars, plus préférentiellement entre 6 et 10 bars.

9. Procédé selon l'une quelconque des revendications précédentes, **caractérisé en ce que** la valeur limite du gradient est supérieure à 100 bars/seconde, de préférence supérieure à 150 bars/seconde, de manière particulièrement préférée supérieure à 200 bars/seconde.

10. Système de freinage hydraulique présentant au moins un frein de roue hydraulique (2) et un dispositif de pressurisation (3) qui est relié au frein de roue (2) et qui est adapté pour transporter un débit volumique en direction de l'au moins un frein de roue (2) et une soupape de décharge (7) qui est reliée au frein de roue (2) de telle sorte qu'un débit volumique peut s'écouler à partir du frein de roue par l'intermédiaire de la soupape de décharge et adapté pour régler une pression hydraulique sur l'au moins un frein de roue (2), **caractérisé en ce qu'**il est prévu une unité de commande qui est adaptée pour exécuter un procédé selon les revendications 1 à 7.

Fig. 1

EP 4 149 805 B1

10    p(t)

11    $dp/dt$

20    $dp/dt > dp_{grenz}/dt$

21    $dV_{min}/dt$

12    $dV_{bed}/dt$

22    $dV_{bed}/dt > dV_{min}/dt$

23    $p(t) - p_{mod} < \Delta p_{grenz}$

13    Pumpe

24    $dV_{min}/dt \rightarrow x$

14    $dV_{pumpe}/dt$

15    $dV_{über}/dt$

16    $I_{ventil}(\Delta p, dV_{über}/dt)$

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012319466 A1